# EUROPEAN PATENT APPLICATION

(11) **EP 2 380 715 A1**
(43) Date of publication of application: **26.10.2011**
(21) Application number: 10729116.3
(22) Date of filing: 07.01.2010
(51) Int. Cl.: B27G 5/02, B27B 27/08

(54) **HINGED SQUARE**

(30) Priority: 08.01.2009 ES 200900042
(71) Applicant: Cañas Y Gomez, S.L., 36350 Nigrán - Pontevedra (ES)
(72) Inventor: CAÑAS FONTAN, José, 36350 - Nigrán - Pontevedra (ES)
(74) Representative: Carvajal y Urquijo, Isabel
(86) International application number: PCT/ES2010/000002
(87) International publication number: WO 2010/079248

(57) **Abstract**

The present invention relates to an articulated square formed by a rule-arm (1) and a handle-arm (2) linked through an independent intermediate articulation element (3) which is assembled on the rule-arm with the ability to move along same. The handle-arm (2) is articulated by one of its ends to the intermediate articulation element (3),

## Description

### Field of the Invention

The present invention relates to an articulated square formed by two rigid straight arms articulated to one another according to a shaft which is perpendicular to the plane defined by both arms.

The square of the invention is especially conceived to serve as guiding means in cutting operations with jig and circular saws, mainly used for cutting wood.

### Background of the Invention

Squares of the type indicated are already known, where one of the arms acts as a rule, while the other acts as a handle. Hereinafter these arms will be referred to, respectively, as rule-arm and handle-arm.

In traditional squares of the type described, the articulation between the two arms is fixed, generally being formed by a screw passing through both arms and being able to be locked by means of a nut or wing nut once the angle between the two arms has been selected.

A square with this constitution is described for example in US 6752759 and in Spanish patent application number 200700787 of the same applicants.

With the described constitution the square is a rigid instrument in terms of its use possibilities due to the fact that the point of articulation between the two arms is of a fixed position, which makes the dimension of the square always constant, even with the possibility of varying the angle between the two arms.

The square furthermore lacks securing means for securing it both to the machine and to the parts to be cut.

### Description of the Invention

The object of the present invention is a square the dimension of which can be adjusted according to the cutting operations to be performed, and further having means which allow securing said square to the base of the cutting machine and also to the part to be cut.

The square of the invention thereby solves the aforementioned problems of traditional squares and allows having an instrument which can be adjusted to the cutting needs at all times, depending both on the cut to be made and on the characteristics of the parts on which the cuts are made.

According with the invention, the two arms forming the square, a rule-arm and a square-arm are connected through an of independent intermediate articulation element which is assembled on an intermediate point of the rule-arm with the ability to move along said rule-arm, while it is articulated to the handle-arm at one of its ends, said articulation element having locking means for locking on the rule-arm and on the handle-arm.

With this constitution, in addition to the possibility of varying the angle between the two arms, the point of articulation thereof can also be selected at will, as a result of the possibility of moving the intermediate articulation element along the rule-arm, thus being able to have squares the rule-arm of which can adopt different relative dimensions.

The articulation element between the two arms of the rule of the invention can consist of a plate in the shape of a flat graduated sector which is placed against the upper surface of the handle-arm and assembled thereon through a longitudinal track of said arm. The articulation element will be able to move along this track. The handle-arm, in turn, is articulated to this sector in the centre thereof by means of a shaft which allows the free rotation between both components.

The graduated sector will further have an arched groove concentric with the point of articulation between said sector and the handle-arm. A screw passes through this groove, being screwed to the handle-arm, and serves as locking means between the two components. This arched groove will further have a graduated scale in order to be able to fix the angle formed between the two arms.

The aforementioned track of the guide arm runs parallel and close to one of the longitudinal edges of said rule-arm. The head of one or more screws which can move ' along the channel and will serve both as fixing means for fixing the articulation element to the rule-arm and as locking means for locking the articulation element itself on said arm is housed in this track.

The square of the invention also has securing means for the securing thereof, such as, for example, to the parts to be cut, which means can be formed by a vice which is assembled with the ability to move on a track running longitudinally on the lower face of the rule-arm. This rule-arm can have another additional lower longitudinal track in which a retractable distance marker is assembled, which can also move along said rule.

To secure the fixing of the square of the invention to the base of the cutting machine, the rule-arm of the square carries permanent magnets which are assembled on the free longitudinal edge of said rule-arm.

In a preferred embodiment, the rule-arm is formed by an extruded profile which is provided with four longitudinal tracks. A first track runs along its upper face, close to one of the longitudinal edges, which will serve for assembling the head of the fixing screw or screws for fixing the graduated sector; a second track runs along the opposite longitudinal edge of this same rule-arm in which the magnets are assembled; and third and fourth tracks run along the lower face of the rule-arm where the previously fixed vice and marker are assembled.

According to an embodiment variant, the articulation element can be formed by a clamp, the jaws of which perpendicularly brace the rule-arm on one side, while on the opposite side or end the end of the handle-arm is received between the two jaws. The two jaws stay linked by means of a screw with a lock nut or wing nut also passing through the handle-arm to serve both as articulation means between both components and as locking means for locking the articulation element. The jaws will be movable along the rule-arm when said jaws are coupled on longitudinal runners which said rule-arm has on its upper and lower faces, parallel and close to one of the longitudinal edges.

### Brief Description of the Drawings

The attached drawings show a non-limiting embodiment of the square of the invention, wherein:
Figure 1 shows a perspective view of an articulated square formed according with the invention.
Figure 2 shows a plan view of the square of Figure 1.
Figure 3 shows a front view of the same square according to direction A of Figure 1.
Figure 4 shows a view to similar Figure 2, showing a possible embodiment variant.
Figure 5 shows a cross-section view of the same square taken according to the section line V-V of Figure 4.

### Detailed Description of an Embodiment

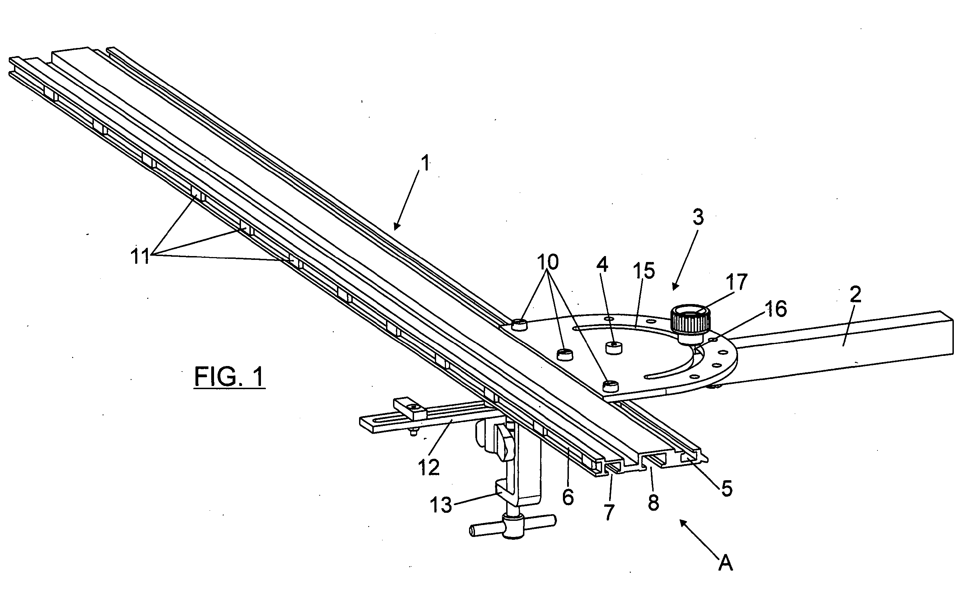

Figures 1 to 3 show a preferred embodiment of the square of the invention, which is formed by two rigid straight arms, one straight arm acting as a square rule which will be referred to as a rule-arm and generally indicated with the reference number 1, and another arm acting as a mango, indicated with the reference number 2, which will be referred to as handle-arm.

The two arms are linked to one another by means of an intermediate articulation'element which is generally referenced with number 3. This intermediate articulation element is formed by a flat plate in the form of an approximately 180° sector which is fixed to the rule-arm 1 with the possibility of moving along same, while it is connected in an articulated manner to the handle-arm 2 according to a rotation shaft 4.

In the example depicted in the drawings the rule-arm 1 is formed by a profile, for example an extruded profile, having four longitudinal tracks respectively indicated, with reference numbers 5, 6, 7 and 8. These tracks consist of approximately rectangular section grooves with their mouth being partially restricted.

Heads 9 of screws 10, serving as fixing elements for fixing the intermediate articulation element 3 to the rule-arm 1 are housed in the track 5 with the ability to slide therein.

Permanent magnets 11 which will serve as fixing means for fixing the square to the base of the cutting machine with which the cut will be made are housed in the track 6.

A foldable or collapsible distance marker 12 is assembled in the track 7 also with the ability to slide therein. Finally, a vice 13 which will serve as auxiliary fixing means for fixing the square to a workbench or to the parts to be cut is assembled in the track 8, likewise with the ability to move therein,.

The plate or sector forming the intermediate articulation element 3 has an arched groove 15 with its centre at the articulation shaft 4, through which groove there passes a threaded rod 16 which is fixed to the handle-arm 2, and at the end of which a nut 17 is screwed by means of the tightening of which the intermediate articulation element 3 and the handle-arm 2 are locked.

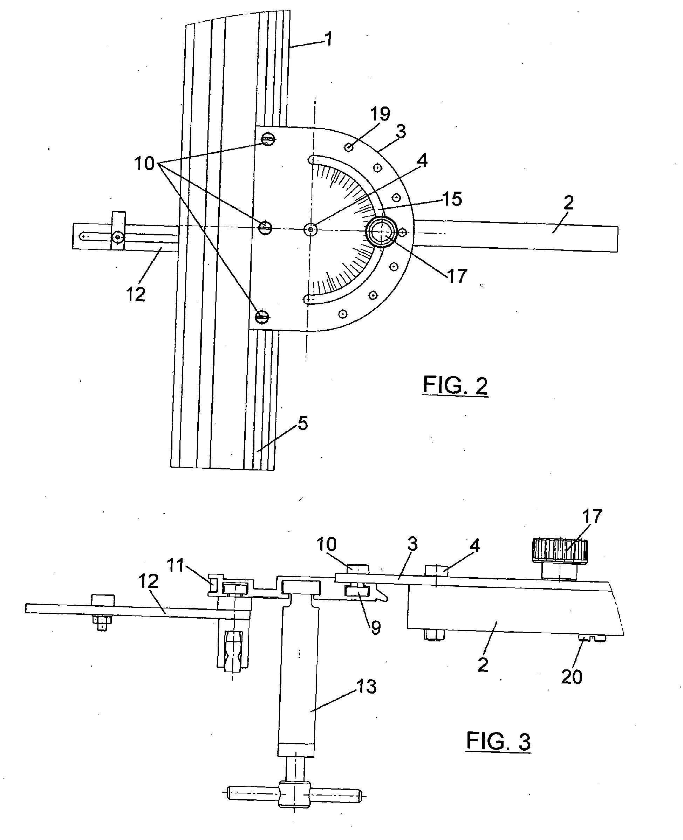

As can be seen in Figure 3, the arched groove 15 can have an amplitude of 180° and include a graduated scale, with a graduation of 0° to 45° on either side of the centre point which will correspond to an angle of 90° formed between the handle-arm 2 and the rule-arm 1, the position depicted in Figure 2.

The intermediate articulation element 3 can also have outside the groove 15 holes 19 where the end of a screw 20 can partially penetrate, Figure 3, passing through the handle-arm 2 from its lower face for defining partial locking points between said handle-arm 2 and the intermediate articulation element 3.

With the described square, the relative position between the rule-arms 1 and handle-arm 2 can be selected at will by simply loosening the screws 10, thereby allowing the intermediate articulation element 3 to move along the rule-arm 1, later tightening said screws once the desired position is reached.

In the same manner, the angle between rule-arm 1 and rule-arm 2 can be selected by loosening the screw 17 and rotating the rule-arm 2 with respect to the intermediate articulation element 3 about the shaft 4 in either direction, later tightening said screw once the desired angle is reached.

The square can be fixed to the base of the cutting machine by means of the magnets 11. The square of the invention also has securing means for securing the parts to be cut formed by the vice 13 and marking means for marking the cutting line by means of the marking device 12.

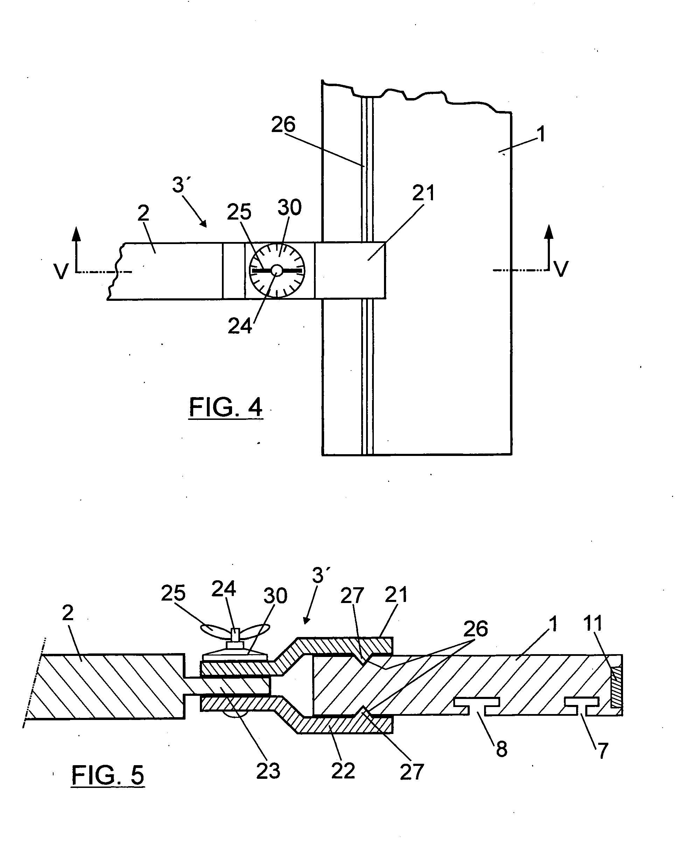

Figures 4 and 5 show an embodiment variant in which the intermediate articulation element is formed by a clamp 3', the jaws of which as shown in Figure 5, perpendicularly brace the rule-arm 1 from one of its ends, while on the opposite side they receive an axial lug 23 of the handle-arm 2, the two jaws and lug 23 being traversed by a screw 24 which can be locked with a nut or wing nut 25, the screw 24 forming the articulation shaft between the handle-arm 2 and the jaws 21 and 22 of the clamp 3'.

As can be seen in Figure 5, the rule-arm 1 has on its larger surfaces respective longitudinal runners 26 parallel and close to one of the edges of the rule-arm, which runners are penetrated by transverse ribs 27 protruding from the jaws 21 and 22, said runners and ribs serving as guiding means for the movement of the clamp 3' along the rule-arm 1.

In other respects, the rule-arm 1 can carry the same magnets 11 along the free edge and can have lower tracks 7 and 8 for the assembly of the marker 12 and vice 13, described in reference to Figures 1-3.

A disc 30 with a graduated scale for selecting and fixing the angle between the handle-arm 2 and the intermediate articulation element 3' can be assembled in the screw 24 serving as an articulation shaft between said arm 2 and the intermediate articulation element 3'.

Both the rule-arm 1 and the handle-arm 2 can carry non-slip elements for securing their support on slippery surfaces. The rule-arm 1 will further be marked in millimetres on both sides serving to indicate the cutting distance on the edge carrying the magnets and to be used as a rule on the other edge.

## Claims

1. An articulated square formed by two rigid straight arms, a rule-arm and a handle-arm articulated to one another according to a shaft perpendicular to the plane defined by said arms, **characterised in that** the two mentioned arms are connected through an independent intermediate articulation element, which is assembled on an intermediate point of the rule-arm, with the ability to move along said rule-arm, while it is articulated to the handle-arm at one of its ends, said intermediate articulation element having locking means for locking it on the rule-arm and on the handle-arm.

2. The square of claim 1, **characterised in that** the intermediate articulation element consists of a plate in the form of a flat graduated sector which is placed against the upper surface of the handle-arm and assembled thereon through a longitudinal track of said surface along which it can move, the handle-arm being articulated to said sector in the centre thereof.

3. The square of claim 2, **characterised in that** the longitudinal track runs parallel and close to one of the longitudinal edges of the rule-arm, and the head of one or more moving screws moving along said track serving as fixing and locking means for fixing and locking the intermediate articulation element on said rule-arm is housed therein.

4. The square according to claim 3, **characterised in that** the graduated sector has an angular amplitude of approximately 180° and has an arched groove with a centre at the point of articulation between said sector and the handle-arm, through which a screw passes, being screwed into said handle-arm, and serves as locking means between both components.

5. The square according to the preceding claims, **characterised in that** the rule-arm carries a lower anchoring vice and a retractable distance marker, both assembled and movable on respective longitudinal tracks running along of the lower surface of said rule-arm.

6. The square according to claim 1, **characterised in that** the intermediate articulation element consists of a clamp, the jaws of which perpendicularly impinge an end of the rule-arm, which they brace on one of its longitudinal edges, while on the opposite side the end of the handle-arm is received between both jaws, the two jaws being linked by means of a screw with a lock nut passing through the handle-arm to serve as an articulation and locking means between both components; the two jaws being supported, by means of inner transverse ribs thereof, on respective runners running on the upper and lower faces of the rule-arm, parallel and close to one of its longitudinal edges, with the ability to move along said runners. ,

7. The square according to claims 1 and 6, **characterised in that** the rule-arm carries permanent magnets which are assembled on the free longitudinal edge of said rule-arm. '

8. The square according to the preceding claims, **characterised in that** the rule-arm is formed by an extruding profile, with the tracks and runners in which they are assembled, with the ability to move along same, the intermediate articulation element, the aforementioned vice and marker, further including a longitudinal channel on its free edge in which the permanent magnets are arranged.
